# EUROPÄISCHE PATENTSCHRIFT

(11) **EP 0 546 340 B1**
(45) Veröffentlichungstag und Bekanntmachung des Hinweises auf die Patenterteilung: **12.04.1995**
(21) Anmeldenummer: 92119426.2
(22) Anmeldetag: 13.11.1992
(51) Int. Cl.: F16B 13/12

(54) **Plastik-Dübel**
Plastic dowel
Cheville en plastique

(30) Priorität: 09.12.1991 DE 4140512
(43) Veröffentlichungstag der Anmeldung: 16.06.1993
(73) Patentinhaber: A. Raymond & Cie, F-38028 Grenoble-Cédex (FR)
(72) Erfinder: Moretti, Erminio, F-38000 Grenoble (FR); D'Aloia, Gaetan, F-38130 Echirolles (FR); J'Espere, Jean-Louis, F-38170 Seyssinet-Pariset (FR)
(74) Vertreter: Kirchgaesser, Johannes, Dipl.-Ing.

(56) Entgegenhaltungen:
- DE-A- 1 750 259
- FR-A- 2 622 430
- GB-A- 2 058 268
- US-A- 1 476 834

## Beschreibung

Die Erfindung bezieht sich auf Plastik-Dübel der in Oberbegriff des Anspruchs 1 angegebenen Art. Diese werden in der Praxis zur Befestigung von Bauteilen an Trägerkörpern wie beispielsweise Wände, Böden oder auch Decken verwendet, wobei die Trägerkörper in der Regel aus hartem Material wie Beton, Ziegelsteine oder dergleichen gebildet sind. In diesen Fällen ist es erforderlich, in den Trägerkörper ein Loch entsprechend dem Schaftdurchmesser und der Schaftlänge zu bohren, um den Dübel in dieses Loch einsetzen und dann die Schraube eindrehen zu können.

Vielfach werden für Decken und Wände aber auch sogenannte Gipskartonplatten verwendet, bei welchen eine etwa 1 cm starke Gipsplatte auf beiden Seiten durch eine starke Papierbahn zusammengehalten wird. Will man in diese Gipskartonplatte einen solchen Dübel setzen, so muß ebenfalls zunächst ein Loch gebohrt werden, obwohl dieses Material so weich ist, daß man problemlos einen härteren Stift wie beispielsweise einen Nagel eintreiben kann.

Dies gilt auch für den eigens für Gipskartonplatten entwickelten Plastik-Dübel mit seinen zusammenklappbaren, spitz auslaufenden Spreizfingern gemäß DE - A - 17 50 259. Auch für diesen Dübel muß ein Loch von mindestens einem solchen Durchmesser vorgebohrt werden, daß die Spitzen des Dübels beim Eintreiben von dem Lochrand zusammengehalten werden.

Aufgabe der Erfindung ist es daher, den vorgenannten Plastik-Dübel so zu gestalten, daß er ohne Beeinträchtigung seiner Dübelfunktion sowohl in Trägerkörpern aus hartem Material als auch in Gipskartonplatten eintreibbar und darin verankerbar ist, wobei bei den Gipskartonplatten auf eine Vorbohrung verzichtet werden kann.

Diese Aufgabe wird nach den kennzeichnenden Merkmalen des Patentanspruchs 1 dadurch gelöst, daß der eine Spreizfinger länger als der andere Spreizfinger ausgebildet und mit einer das Ende des kürzeren Spreizfingers überdeckenden hakenförmigen Spitze versehen ist, wobei das Ende des kürzeren Spreizfingers in die Hakenvertiefung eintaucht und die Hakennase das Ende des kürzeren Spreizfingers nur soweit überdeckt, daß der Spreizfinger beim Eindrehen der Schraube ausrastet und wobei die Spreizfinger vom Schaftteil bis zur Hakenspitze spitzbogenförmig ausgebildet sind.

Das sichert den Zusammenhalt der Spreizfinger beim Eintreiben des Dübels in die Platte und ermöglicht gleichzeitig ein sofortiges Spreizen der Finger beim Eindrehen der Schraube.

Weitere Merkmale der Erfindung sind in den Unteransprüchen angegeben, wobei die elliptische Ausbildung des geschlossenen Schaftteils dafür sorgt, daß der in die Trägerplatte eingetriebene Dübel sich beim Eindrehen der Befestigungsschraube nicht im Loch mitdreht.

Die sägezahnförmigen Zacken an den Seitenkanten der Spreizfinger erleichtern das Eintreiben des Dübels in die Gipskartonplatte und sorgen für ein sauber "gesägtes" Loch entsprechend dem abgeflachten Schaft, so daß beim Eindrehen der Schraube auch die Schaftwände gegen den umgebenden Gips fest angedrückt werden.

Durch die Spreiznocken an den Innenwänden der Spreizfinger gemäß Anspruch 4 wird außerdem noch die Spreizwirkung für die Spreizfinger verstärkt. Dies ist besonders bei der Verankerung der Dübel in Platten wichtig, wo die Spreizfinger hinter der Plattenoberfläche frei auseinandergehen und der Dübel im wesentlichen am Lochaustrittsrand seinen Halt findet.

In der Zeichnung ist ein Ausführungsbeispiel der Erfindung dargestellt, welches nachfolgend näher beschrieben werden soll.

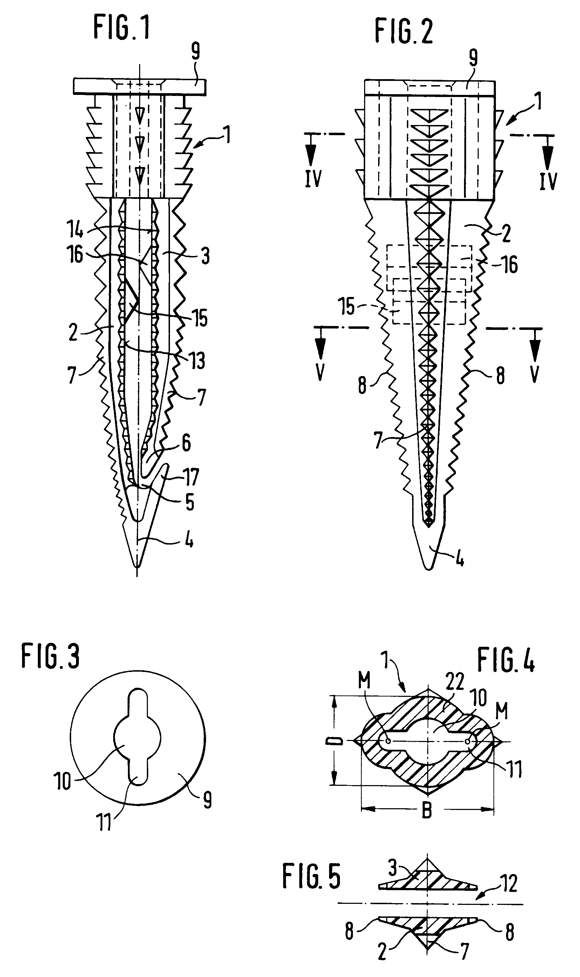

Es zeigt
- Fig. 1: einen Dübel in Seitenansicht,
- Fig. 2: den Dübel in Vorderansicht,
- Fig. 3: den Dübel in Draufsicht,
- Fig. 4: einen Schnitt durch den geschlossenen Dübelschaft gemäß Linie IV - IV in Fig. 2,
- Fig. 5: einen Schnitt durch die Spreizfinger gemäß Linie V - V in Fig. 2,
- Fig. 6: einen in eine Gipskartonplatte eingetriebenen Dübel mit spitz auslaufenden Spreizfingern,
- Fig. 7: das gleiche Bild bei eingedrehter Schraube und gespreizten Fingern,
- Fig. 8: den Einsatz des Dübels im Loch einer harten Trägerplatte und
- Fig. 9: das gleiche Bild bei eingedrehter Schraube und gespreizten Fingern.

Der in den Figuren dargestellte Plastik-Dübel besteht aus einem geschlossenen Schaftteil 1 und zwei daran angeformten, gegenüberliegenden Spreizfingern 2 und 3, von denen der eine Spreizfinger 2 etwas länger als der andere Spreizfinger 3 ausgebildet ist.

Der längere Spreizfinger 2 ist mit einer hakenförmigen Spitze 4 versehen, in dessen Vertiefung 5 das spitz auslaufende Ende 6 des Spreizfingers 3 im Anlieferungszustand eintaucht.

Die Spreizfinger 2 und 3 sind vom Schaftteil 1 bis zur Hakenspitze 4 spitzbogenförmig ausgebildet und an der Außenseite mit Zacken 7 versehen. An den einander gegenüberliegenden Seitenkanten der Spreizfinger 2 und 3 sind ferner sägezahnförmige Zacken 8 angeformt.

Der geschlossene Schaftteil 1 ist im Querschnitt etwa elliptisch geformt und mit einer nach allen Seiten überstehenden Kopfplatte 9 versehen. Der Schaft 1 und die Kopfplatte 9 sind von einem Rundloch 10 durchdrungen, das durch zwei gegenüberliegende, zu den Ellipsenmittelpunkten hinweisende Rillen 11 erweitert ist. Das Rundloch 10 dient zum Einführen einer Schraube 18 und ragt bis in die Spreizfinger 2 und 3 hinein, während die Rillen 11 am Ende des Schaftteils 1 in den nach beiden Seiten offenen Spalt 12 zwischen den gegenüberliegenden Seitenkanten der Spreizfinger 2 und 3 übergehen.

An den gegenüberliegenden Innenwänden 13 und 14 der Spreizfinger 2 und 3 ist etwa in deren oberer Hälfte jeweils ein Spreiznocken 15 und 16 angeformt, von denen der Spreiznocken 16 des kürzeren Spreizfingers 3 zweckmäßigerweise oberhalb des Spreiznockens 15 des längeren Spreizfingers 2 angeordnet ist.

Die Hakenspitze 4 ist so ausgebildet, daß die hochstehende Hakennase 17 das Ende 6 des kürzeren Spreizfingers 3 etwas überdeckt, aber nur soviel, daß dieses Ende 6 beim Eindrehen der Schraube 18 ausrastet und die Finger 2 und 3 zum Aufspreizen frei sind. Dieses Ausrasten und Aufspreizen wird durch die Spreiznocken 15 und 16 noch begünstigt.

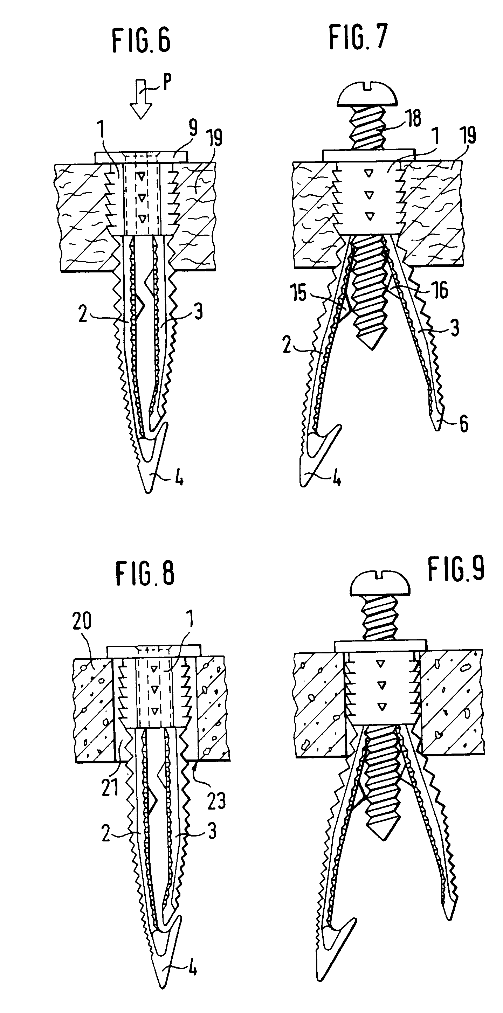

In den Figuren 6 bis 9 sind zwei Einsatzmöglichkeiten für den erfindungsgemäßen Plastik-Dübel dargestellt. Figur 6 zeigt den Dübel mit seinen spitz auslaufenden, noch ineinander verhakten Spreizfingern 2 und 3 nach dem Eintreiben in eine Gipskartonplatte 19, wobei das Eintreiben durch Schläge mit einem nicht dargestellten Hammer in Richtung des Pfeiles P erfolgt. Der Gips in der Platte 19 wird hierbei mühelos von der Spitze 4 und den nachfolgenden Spreizfingern 2 und 3 auseinandergetrieben und von den sägezahnförmigen Zacken 8 sauber durchgetrennt.

Beim anschließenden Eindrehen der Schraube 18 werden zunächst die das Rundloch 10 umgebenden Schaftwände 22 auseinandergedrückt, so daß der Schaft 1 aus seiner elliptischen Form mehr in eine zylindrische Form übergeht und sich dabei mit den Zacken 7 in den Gips gräbt. Sobald das Schraubengewinde zwischen die Rastnocken 15 und 16 tritt, werden die Spreizfinger 2 und 3 an der Spitze 4 ausgerastet und kräftig nach außen gedrückt und stützen sich zusätzlich noch an der Rückseite der Platte 19 ab.

Figur 8 zeigt den Einsatz des Plastik-Dübels bei Trägerplatten 20 aus härterem Material, wobei zunächst ein Loch 21 gebohrt werden muß, das im Durchmesser etwas kleiner ist als die Schaftbreite "B" und etwas größer als die Schaftdicke "D". Das Eindrehen der Schraube 18 erfolgt dann in der gewohnten Weise, wobei die Schaftwand 22, wie vorher beschrieben, zunächst an die Innenwand des Loches 21 andrückt und dann die Spreizfinger 2 und 3 sich auseinanderspreizen und von der Rückseite der Platte 20 an den Rand 23 des Loches 21 fest anlegen. Die etwa elliptische Form der Schaftwand 22 sorgt hierbei dafür, daß sich der Schaft 1 beim Eindrehen der Schraube 18 nicht im Loch 21 dreht.

Selbstverständlich läßt sich der vorliegende Plastik-Dübel auch bei massivem Trägermaterial wie Beton- oder Steinwänden in vorgebohrte Sacklöcher mit gleich guten Verankerungseigenschaften einsetzen, was die universelle Verwendungsmöglichkeit des erfindungsgemäßen Dübels - sowohl bei weichem wie auch bei hartem Trägermaterial - deutlich macht.

## Patentansprüche

1. Plastik-Dübel aus hartelastischem Material, bestehend aus einem geschlossenen Schaftteil und zwei daran angeformten, einander gegenüberliegenden Spreizfingern mit einem vom rückwärtigen Ende des Schaftteils bis in die Spreizfinger hinein sich erstreckenden Loch zum Eindrehen einer Schraube,
**dadurch gekennzeichnet,** daß
der eine Spreizfinger (2) länger als der andere Spreizfinger (3) ausgebildet und mit einer das Ende des kürzeren Spreizfingers (3) überdeckenden, hakenförmigen Spitze (4) versehen ist, wobei das Ende (6) des kürzeren Spreizfingers (3) in die Hakenvertiefung (5) eintaucht und die Hakennase (17) das Ende (6) des kürzeren Spreizfingers (3) nur soweit überdeckt, daß der kürzere Spreizfinger (3) beim Eindrehen der Schraube (18) ausrastet und wobei die Spreizfinger (2, 3) vom Schaftteil (1) bis zur Hakenspitze (4) spitzbogenförmig ausgebildet sind.

2. Plastik-Dübel nach Anspruch 1, dadurch gekennzeichnet, daß der geschlossene Schaftteil (1) im Querschnitt elliptisch geformt ist, wobei das Rundloch (10) durch zwei zu den Ellipsenmittelpunkten hinweisende axiale Rillen (11) erweitert ist.

3. Plastik-Dübel nach Anspruch 2, dadurch gekennzeichnet, daß an den Seitenkanten der Spreizfinger (2, 3) sägezahnförmige Zacken (8) angeformt sind.

4. Plastik-Dübel nach einem der Ansprüche 1 bis 3, dadurch gekennzeichnet, daß an den gegenüberliegenden Innenwänden (13, 14) der Spreizfinger (2, 3) je ein Spreiznocken (15, 16) angeformt ist.

## Claims

1. A plastics dowel of hard-elastic material, comprising a closed shank portion and two mutually oppositely disposed spreading fingers formed thereon, with a hole which extends fro the rearward end of the shank portion into the spreading fingers, for screwing in a screw,
characterised in that one spreading finger (2) is longer than the other spreading finger (3) and is provided with a hook-shaped tip (4) which covers over the end of the shorter spreading finger (3), wherein the end (6) of the shorter spreading finger (3) engages into the recess (5) defined by the hook and the hook nose (17) covers over the end (6) of the shorter spreading finger (3) only to such an extent that the shorter spreading finger (3) comes out when the screw (18) is screwed in and wherein the spreading fingers (2, 3) are of a pointed arc configuration from the shank portion (1) to the hook tip (4).

2. A plastics dowel according to claim 1 characterised in that the closed shank portion (1) is of elliptical shape in cross-section, wherein the round hole (10) is enlarged by two axial grooves (11) which face towards the centre points of the ellipse.

3. A plastics dowel according to claim 2 characterised in that sawtooth-shaped scallops (8) are formed at the side edges of the spreading fingers (2, 3).

4. A plastics dowel according to one of claims 1 to 3 characterised in that a respective spreading projection (15, 16) is formed at each of the oppositely disposed inside walls (13, 14) of the spreading fingers (2, 3).

## Revendications

1. Cheville en matière plastique à cédage élastique dur, se composant d'une tige fermée et de deux pattes expansibles diamétralement opposées, réalisées par moulage solidaires de celle-ci et comportant un trou pour introduction d'une vis, qui va de l'extrémité arrière de la tige jusque dans les pattes expansibles, **se caractérisant par le fait** qu'une des pattes expansibles (2) est plus longue que l'autre patte (3) et est munie d'une extrémité effilée en forme de crochet (4) qui vient recouvrir l'extrémité de la patte expansible plus courte (3), l'extrémité (6) de la patte expansible plus courte (3) s'imbriquant en l'occurrence dans l'évidement (5) du crochet et l'ergot (17) du crochet ne recouvrant en l'occurrence l'extrémité (6) de la patte expansible plus courte (3) que dans une proportion telle que lors de l'introduction d'une vis (18) dans la cheville, la patte expansible plus courte (3) se désolidarise de son homologue, et que les pattes expansibles (2, 3) attenantes à la tige (1) ont une configuration en forme d'ogive jusqu'à l'extrémité effilée formant crochet.

2. Cheville en matière plastique suivant la revendication 1, se caractérisant par le fait que la tige fermée (1) a une section de forme elliptique, le trou circulaire (10) étant en l'occurrence élargi par deux gorges axiales (11) orientées en direction des centres de l'ellipse.

3. Cheville en matière plastique suivant la revendication 2, se caractérisant par le fait que les rives latérales des pattes expansibles (2, 3) sont munies de crans en dent de scie (8) venus de moulage.

4. Cheville en matière plastique suivant les revendications 1 à 3, se caractérisant par le fait que les pattes expansibles (2, 3) comportent chacune, au niveau de leur paroi intérieure se faisant respectivement face (13, 14), un ergot d'expansion.
